# EUROPEAN PATENT APPLICATION

(11) **EP 1 489 613 A1**
(43) Date of publication of application: **22.12.2004**
(21) Application number: 03707090.1
(22) Date of filing: 26.02.2003
(51) Int. Cl.: G11B 21/02, G11B 7/08, G11B 17/04

(54) **DISK DRIVE DEVICE**

(30) Priority: 26.02.2002 JP 2002049801
(71) Applicant: Citizen Watch Co., Ltd., Tokyo 188-8511 (JP)
(72) Inventor: WAKITA, Maki,c/o Citizen Watch Co., Ltd., Nishitokyo-shi, Tokyo 188-8511 (JP); TAKAHASHI, Shoji,c/o Citizen Watch Co., Ltd., Nishitokyo-shi, Tokyo 188-8511 (JP)
(74) Representative: Mounteney, Simon James
(86) International application number: PCT/JP2003/002122
(87) International publication number: WO 2003/077251

(57) **Abstract**

Tilt adjustment for a guide member with respect to a rotational reference surface of a rotary table is made on the basis of an external reference in which an inner peripheral side end of a disc is vertically adjusted by setting an outer peripheral side end as a reference. A given vertical fluctuation amount range of the outer periphery of the disc in rotation and a necessary tilt adjustment amount range for the adjustment of the tilt of an optical axis associated with a head are made to overlap each other. The uppermost end position of the head is situated within the given fluctuation amount of the outer periphery of the disc-shaped recording medium below the rotational reference surface of the disc rotary table.

## Description

### TECHNICAL FIELD

This invention relates to a disc drive unit for carrying and rotating a disc-shaped recording medium, such as a compact disc (CD), digital video disc (DVD), etc., thereby writing and reading information.

### BACKGROUND ART

Some disc drive units are incorporated in a host device such as a notebook personal computer, in which internal mechanisms are arranged with high density. The host device of this type has limited room in its internal space, so that a disc drive unit to be incorporated in it must be made thin (with respect to its vertical dimension or height with the plane of rotation of a disc-shaped recording medium regarded as horizontal) and compact.

Information is written to or read from the disc-shaped recording medium (hereinafter referred to simply as disc) by irradiating the rotating disc with a narrow laser beam emitted from a head or by receiving the resulting reflected light. To attain this, there is provided a disc drive unit that rotates the disc, guides the head so that it reciprocates straight in the radial direction of the disc with respect to the rotating disc, and writes to or reads information from the disc.

The head inevitably undergoes slight dimensional and positional fluctuations in manufacture, and every product is subject to dispersion (0.2 to 0.3° to the optimal inclination angle) in the optical axis angle of the laser beam emitted from the head. In order to adjust the optical axis angle of the laser beam that is incident on the disc after the head is set in place, therefore, a mechanism is needed to adjust the tilt of the head. Thus, as is described in Japanese Patent Application Laid-open No. 2000-57715 or Japanese Patent Application Laid-open No. 2000-311355, for example, the tilt of the head is conventionally adjusted by regulating the tilt of a guide member that linearly guides the head for sliding motion in the radial direction of the disc. In the cases of the inventions described in these publications, two guide members are provided each having one end located on the inner peripheral side of the disc and the other end located on the outer peripheral side of the disc. One of the guide members is provided with tilt adjustment mechanisms on both the inner and outer peripheral sides, while the other guide member is provided with a tilt adjustment mechanism on the outer peripheral side.

This structure is used in order to fix three points on a space that settles a plane.on which the head moves. As for the tilt of the plane, on which the head moves, in the radial direction of the disc, it is only necessary to adjust the tilt of the guide member in the radial direction of the disc.

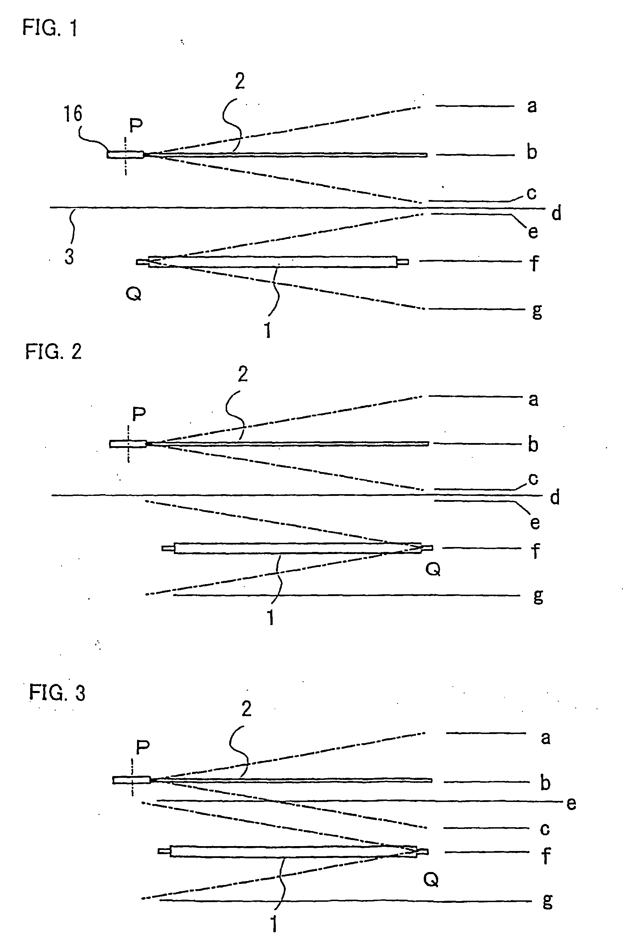

As shown in FIG. 1, one such conventional tilt adjustment mechanism adjusts the tilt by regulating the height (perpendicular to a rotational reference surface of a rotary table) of an end of a guide member 1 on the outer peripheral side of the disc, with respect to an end Q on the inner peripheral side. It requires a range (e-g) for the adjustment of the tilt of the guide member 1 (guide shaft) on the outer peripheral side of the disc. The range (e-g) also implies an adjustment amount.

Further, numeral 2 denotes the disc, and numeral 3 denotes a protective member, such as a thread cover. Lines a to g represent individual outer peripheral end positions or distal end positions. Line b represents a position corresponding to the rotational reference surface of the rotary table that carries and rotates a disc 2, and symbol P designates a center of rotation. For ease of illustration, the tilt is exaggerated in the drawing.

Line d represents a horizontal reference surface of the protective member 3 that is determined by the relation with the rotational reference surface b of the rotary table and is parallel to the rotational reference surface b.

On the other hand, the outer peripheral side of the disc 2 is subject to a given amount of fluctuation (a-c, about 0.9 mm as a general allowable standard in the industry) in a direction perpendicular to the reference surface of the rotary table, in the manufacture of the disc 2 or from various causes, such as deflection of a disc drive motor. If possible troubles, such as a collision between the head and the disc 2 during operation of the disc drive unit 4, are considered to the maximum extent practicable, therefore, the given fluctuation amount (a-c) must be taken into consideration. Thus, the distance between the disc 2 and the guide member 1 at least takes a value that is equal to the sum of the given fluctuation amount (a-c) during the disc rotation and the tilt adjustment amount (e-g) for the guide member 1, that is, based on the two values. Distances c-d and d-e are minimum necessary clearances that are set for safety's sake to avoid contact with the protective member 3.

Actually, the protective member 3 (thread cover or the like) is located lest the guide member 1 be exposed between the disc 2 and the head. Therefore, a space to cope with the given fluctuation amount (a-c) of the disc 2 is set above the protective member 3, and a space to cope with the tilt adjustment amount (e-g) of the guide member 1 is set below. A dimension (c-e) for eliminating the possibility of interference with the protective member 3 is used overlying the latter space, so that the dimension between a and g is substantial. Normally, the protective member 3 forms a flat surface that is parallel to the rotational reference surface b in a region where the disc 2 rotates.

In FIG. 1, the tilt adjustment for the guide member 1 is made on the basis of an "internal reference" in which the vertical position of the outer peripheral side end of the guide member 1 is adjusted with use of its inner peripheral side end as a vertical fixed point Q. According to the aforesaid system described in Japanese Patent Application Laid-open No. 2000-57715, the guide member 1 is provided with adjustment structures on its opposite ends. As shown in FIG. 2, therefore, the tilt adjustment for the guide member 1 may be carried out on the basis of an "external reference" in which the vertical position of the inner peripheral end of the guide member 1 is adjusted with use of its outer peripheral side end as the vertical fixed point Q.

Whether based on external reference or internal reference, however, the guide member 1 enjoys the same tilt adjustment amount. In any cases, therefore, the space to cope with the given fluctuation amount (a-c) of the disc 2 is set above the protective member 3, e.g., the thread cover, and the space to cope with the tilt adjustment amount (e-g) of the guide member 1 is set below. Further, as the dimension (c-e) for eliminating the possibility of interference with the protective member 3 is added to the spaces, the dimension between a and g tends to be substantial after all.

### DISCLOSURE OF THE INVENTION

The object of this invention is to reduce a vertical dimension (thickness) of a disc drive unit.

A fluctuation on the outer peripheral side of a disc that is caused when the disc rotates is a displacement of the outer peripheral side with respect to the center of the rotary table in a direction perpendicular to a rotational reference surface of a rotary table. The profile of a space that is not influenced by this fluctuation spreads upward like a wedge as.the center of the rotary table is approached with distance from the outer peripheral side. According to the present invention, this space is utilized to make a space for coping with a given fluctuation amount on the outer peripheral side of the disc and a space for coping with a tilt adjustment amount of a guide member overlap each other (FIG. 3), thereby reducing the vertical dimension (thickness) of a unit.

A disc drive unit comprises a rotary table, head, guide member, and tilt adjustment mechanism. The rotary table has a rotational reference surface for the rotation of a disc placed thereon, and the head reads information from the disc and/or writes information to the disc.

The guide member has an inner peripheral side end and an outer peripheral side end, which define the inner peripheral side and the outer peripheral side, respectively, of the disc placed on the rotary table, and guides the head for sliding motion in the radial direction of the disc.

The tilt adjustment mechanism adjusts a tilt of the guide member in the radial direction of the disc with respect to the reference surface of the rotary table, with use of at least the outer peripheral side end, which is restricted in upward position by regulating means, as a reference.

Thus, the upward position of the inner peripheral side end of the guide member can be adjusted to a position still above the outer peripheral side end, and the range of the given fluctuation amount during disc rotation and the range of the tilt adjustment amount of the guide member can be made to overlap each other.

The tilt adjustment amount (e-g) for the adjustment of the guide member with respect to the reference surface of the rotary table interferes with a given fluctuation amount (a-c) to cause a trouble. Such interference substantially results from a collision between the disc and at least part of the head that reciprocates on the guide member. Therefore, the aforesaid overlapping is intended essentially to enable at least a part of the head to be situated within the given fluctuation amount of the outer periphery of the disc below the reference surface of the rotary table. As this is done, moreover, the upward position of the inner peripheral end of the guide member can be adjusted to a position still above the outer peripheral end of the guide member that is restricted by the regulating means.

Thus, the disc drive unit can be operated without any trouble, and the height dimension of the unit can be compressed

In many cases, the disc drive unit comprises a protective member that is located between the rotational reference surface of the rotary table and the guide member and prevents the guide member from being exposed upward. If the protective member is located horizontally in this position, the inner peripheral side end cannot project above the protective member, even though the tilt adjustment for the guide member is based on an "outer reference". As shown in FIG. 2, therefore, a vertical dimension a-g is the same as the conventional one. Even with use of the protective member, however, if the protective member is inclined so that its outer peripheral side is lower than the center side of the disc, the tilt of the guide member can be adjusted by means of the tilt adjustment mechanism so that at least a part of the head is situated within the aforesaid given fluctuation amount of the outer periphery of the disc below the rotational reference surface of the rotary table.

If the protective member is one such as a thread cover of which a protective portion is flat in the region of the rotational reference surface, the interference with the guide member or the head is avoided by making the side that corresponds to the inner peripheral end side of the guide member higher than the side that corresponds to the outer peripheral end side. Alternatively, however, the other part of the thread cover than that part which corresponds to the area of movement of the head may be formed as a flat protective portion that maintains a horizontal surface parallel to the rotational reference surface of the rotary table. In this case, the interference with the guide member or the head can be avoided by upwardly recessing only that part which corresponds to the head movement area so that the protective member is inclined at that part.

In order to settle the reference for the adjustment by the tilt adjustment mechanism, the guide member may be constructed so that its vertical position is regulated in a manner such that its inner peripheral side end and/or the aforesaid outer peripheral side end, or in some cases, both these ends, are pressed by the protective member or a spring, or in any other manners. Further, the tilt adjustment for the guide member may be arranged so as to be able to adjust the height of the inner peripheral side end and/or the outer peripheral side end.

### BRIEF DESCRIPTION OF THE DRAWINGS

FIG. 1 is a diagram illustrating a conventional internal reference;
FIG. 2 is a diagram illustrating a conventional external reference;
FIG. 3 is a diagram illustrating an external reference according to the present invention;
FIG. 4 is a plan view systematically showing a disc drive unit;
FIG. 5 is a plan view showing a thread chassis with its thread cover off;
FIG. 6 is a plan view of a head drive mechanism;
FIG. 7 is a partially enlarged side view (before adjustment);
FIG. 8 is an enlarged view showing a part of FIG. 7;
FIG. 9 is a partially enlarged side view (after adjustment);
FIG. 10 is an enlarged view showing a part of FIG. 9; and
FIG. 11 is a partially enlarged side view (second embodiment).

### BEST MODE FOR CARRYING OUT THE INVENTION

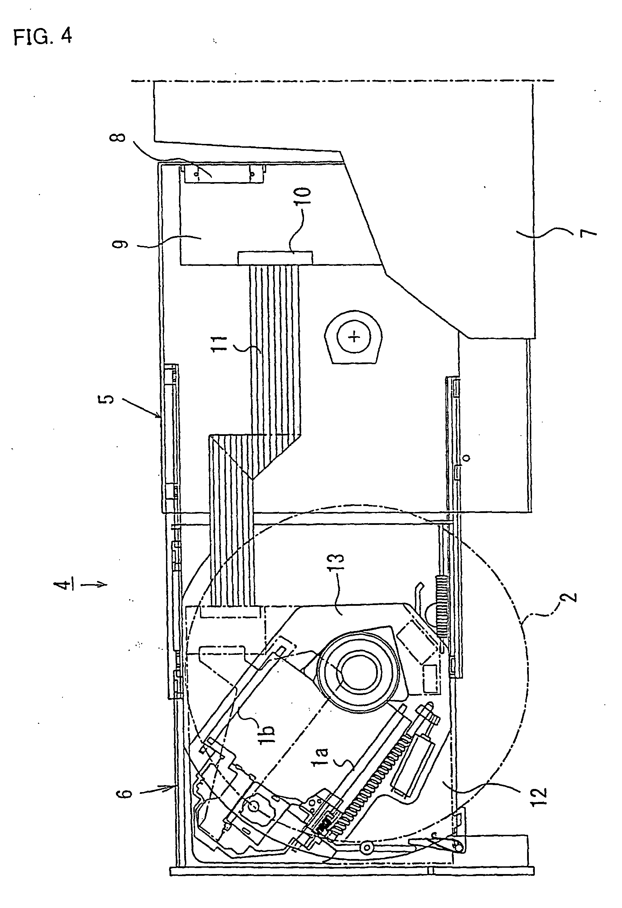

FIG. 4 shows a first embodiment of the present invention. A disc drive unit 4 comprises a body chassis 5 and a tray 6 and is entirely incorporated in a notebook personal computer. Normally, the body chassis 5 has a top cover 7 and forms a box-shaped body chassis 5 as a whole.

The body chassis 5 is provided with a connector 8 for external connection, which connects the disc drive unit 4 to a host device, a circuit board 9 loaded with an interface function therefor, and a connector 10 for internal connection and an FPC (flexible printed circuit) 11, which are used for connection with the side of the tray 6.

The tray 6 has a construction such that a thread chassis 13 is fixed to a tray base 12 of synthetic resin by insertion. Its whole structure can be slid with respect to the body chassis 5 by means of left-and right-hand rail mechanisms that are arranged between itself and the body chassis 5. FIG. 4 shows an unloaded position in which the tray 6 is drawn out of the body chassis 5. In a loaded position, on the other hand, the tray 6 is fully pushed into the body chassis 5. In the loaded position, a disc 2 is driven for rotation, and information is written to or read from it.

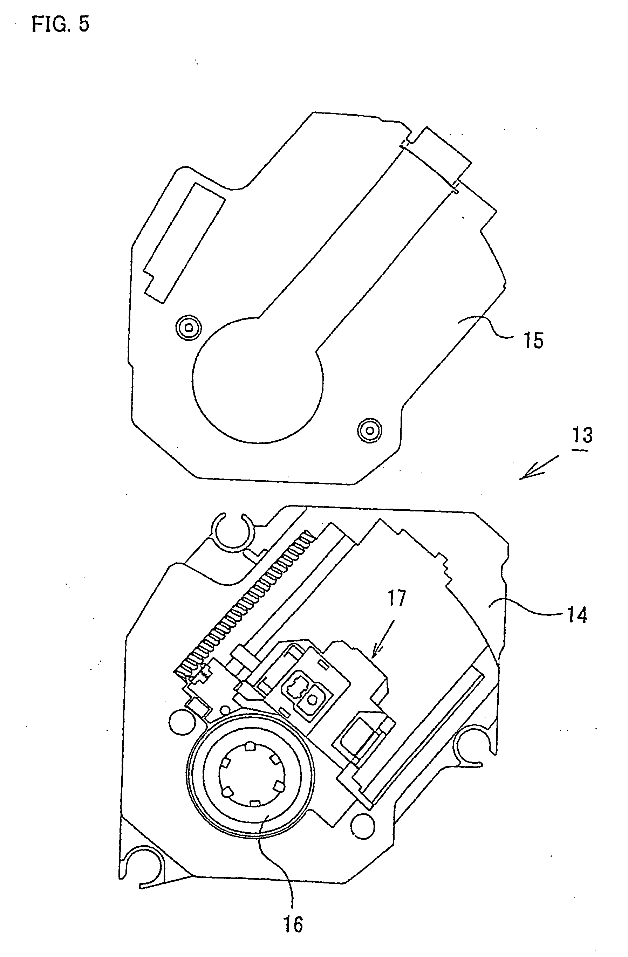

The thread chassis 13 (FIG. 5) has a chassis body 14 of synthetic resin and a thread cover 15 thereon, and a rotary table 16 and a head drive mechanism 17 are mounted on the chassis body 14. The rotary table 16 is driven and rotated by a spindle motor (not shown). Further, a circuit board (not shown) is attached to the underside of the chassis body 14. It has control functions to drivingly control the rotary table 16 and the head drive mechanism 17 and write to and read from the disc 2. The circuit board is connected to the spindle motor and the head drive mechanism 17 by the FPC.

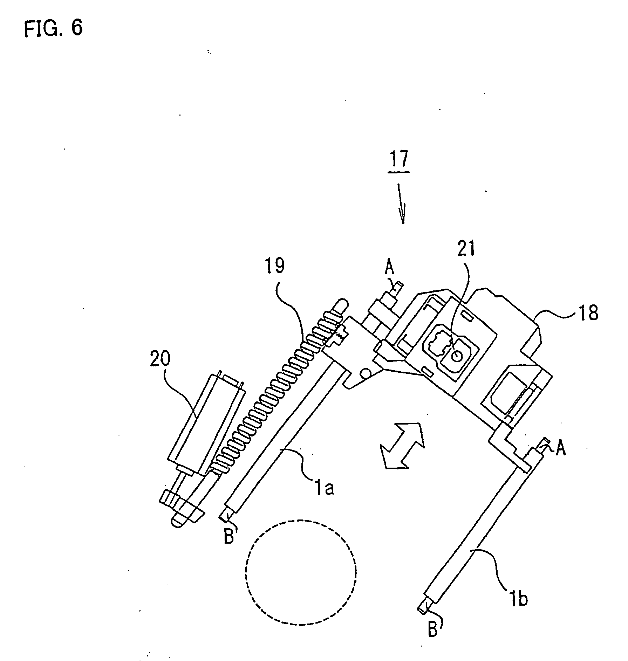

The head drive mechanism 17 (FIG. 6) comprises a main guide shaft 1a and a sub-guide shaft 1b (guide members to be referred to individually as guide members 1), a head 18, a feed screw 19, and a head drive motor 20. The main guide shaft 1a and the sub-guide shaft 1b, as viewed from the top, are arranged extending toward the center of the rotary table 16, parallel to the radial axis. The main guide shaft 1a and the sub-guide shaft 1b are fitted individually with the left- and right-hand sides of the head 18 for sliding motion. The left-hand side of the head 18 that is attached to the main guide shaft 1a is in engagement with the feed screw 19.

Thus, a lens 21 of the head 18 is driven by the head drive motor 20 to reciprocate in the radial direction of the disc 2 that rotates in the loaded position.

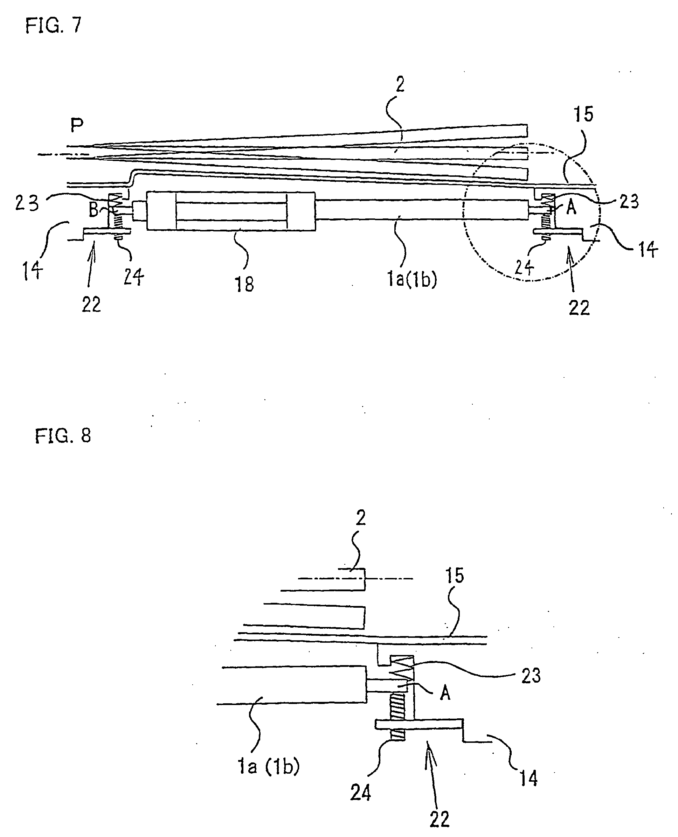

An inner peripheral end B and an outer peripheral end A of each of the guide members 1 (main guide shaft 1a and sub-guide shaft 1b), which are located on the inner and outer peripheral sides, respectively, of the disc 2 set on the rotary table 16, are mounted on the chassis body 14 by means of tilt adjustment mechanisms 22 so that their respective positions can be adjusted in a vertical direction in which they moves close to and away from a reference surface on which a disc-shaped recording medium is placed (FIG. 7). In each tilt adjustment mechanism 22, a spring 23 and an adjust screw 24 are arranged on a step portion of the chassis body 14. Each end portion of each guide member 1 is pressed from above by the spring 23 between itself and the chassis body 14, and at the same time, supported from below by the adjust screw 24. The vertical position of each guide member 1 can be adjusted by regulating the depth of threaded engagement of the adjust screw 24. In this case, the end position of each guide member 1 is regulated if the adjust screw 24 receives the press by the spring 23. Thus, the spring 23 and the adjust screw 24 form regulating means that restricts an upward position of the end portion of each guide member 1.

Accordingly, the positions of those end portions of the guide member 1 can be adjusted vertically, and the upward position can be regulated. Whether the reference is external or internal, the allowable range for the adjustment is a range such that the vertical position of one end of the guide member 1 can be adjusted with respect to the other end to ensure angle adjustment (normally for positive and negative 0.2 to 0.3° ) with respect to the optical axis of the head 18, that is, adjustment of the longitudinal tilt with respect to the reference surface b.

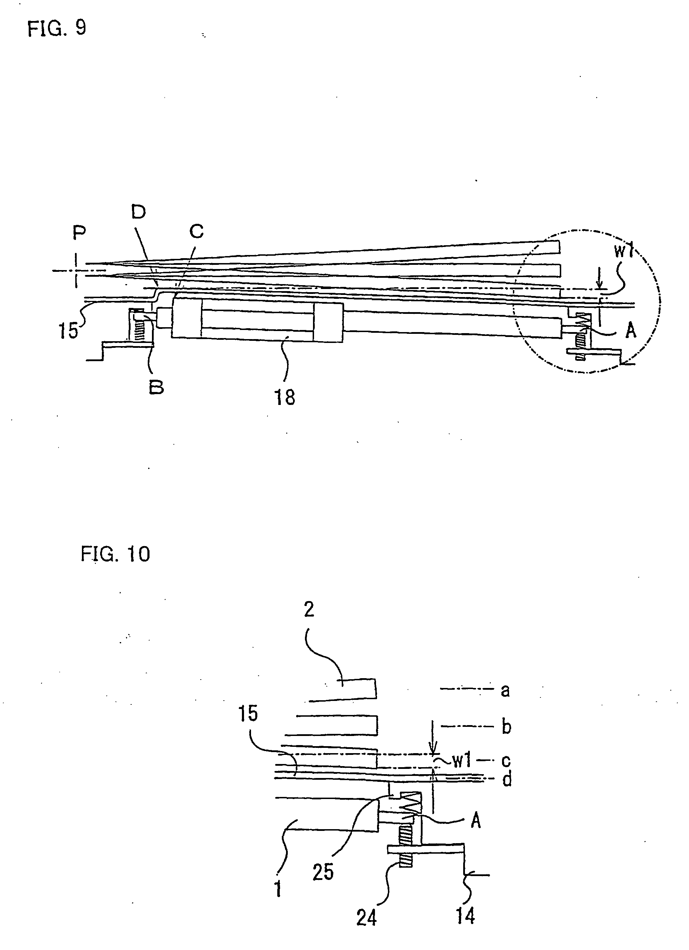

When the position of an uppermost end C of the guide member 1 (normally a position corresponding to the uppermost end of the head 18) is adjusted on the basis of an external reference in which the outer peripheral end A is used as a vertical fixed point, as shown in FIG. 9, the uppermost end C that is nearest to the rotational reference surface b of the disc, based on a tilt adjustment amount of the guide member 1, can be moved upward to an allowable limit such that the outer peripheral end A (FIGS. 1 and 2 and FIG. 10) does not interfere with a fan-shaped space (a-P-c) representing a fluctuation on the outer peripheral side of the disc, and that a distance (b-e) between the uppermost end C and the reference surface b is smaller than a fluctuation (b-c) of the outer periphery of the disc-shaped recording medium, owing to the use of the external reference. If a protective member 3, such as the thread cover 15, is interposed between the disc 2 and the guide member 1, in this case, the plane of the protective member 3 is inclined taking the position of the uppermost end C into consideration so that the protective member 3 is apart from the uppermost end C. In the embodiment of FIG. 9, that part of the thread cover 15 which corresponds to the guide member 1 is inclined lest it engage the uppermost end C.

The thread cover 15 has a recess for preventing interference with the uppermost end C of the guide member 1 and is inclined so that the inner peripheral end side of the recess is situated closer to the reference surface b than the outer peripheral end side is.

An uppermost end D of the thread cover 15 is situated above a reference horizontal surface d of the protective member 3 of FIGS. 1 and 2. The uppermost end position D is situated within the given fluctuation (b-c) on the outer peripheral side of the disc below the reference surface b of the rotary table 16. In consequence, the whole guide member 1 is situated higher than the conventional position limited by the horizontal thread cover 15 by an upward margin (w1) by which the uppermost end D of the thread cover 15 projects above the reference horizontal surface d of the protective member 3, as shown in FIG. 10. The vertical dimension of the disc drive unit 4 can be reduced by this margin (w1)

If possible, the whole thread cover 15 may be previously inclined with respect to the rotational reference surface b or that part of it which corresponds to the guide member 1 may be cut in advance so that the inner peripheral end side of the thread cover 15 is situated closer to the reference surface b than the outer peripheral end side is.

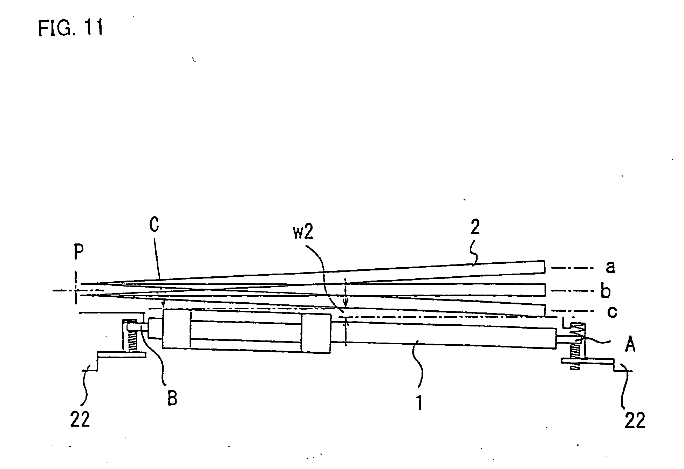

FIG. 11 shows a second embodiment, which is characterized by the absence of the protective member 3. In this case, the outer peripheral side end A of the guide member 1 can be brought close to the lower end c of the fan-shaped space (a-P-c) which represents a given fluctuation of the disc, below the reference surface b, with the result that the whole guide member 1 can be moved further upward by a corresponding margin. In consequence, an overlap (w2) between the tilt adjustment amount range (e-g) and the given fluctuation amount range (a-c) of the disc can be further increased, so that the vertical dimension of the disc drive unit 4 can be reduced accordingly.

In either of the embodiments, the tilt adjustment for the guide member 1 is based on the external reference, moreover, the outer peripheral side end of the guide member 1 must be set on a fixed point at the time of adjustment. In the first and second embodiments, the tilt adjustment mechanisms 22 are formed individually on the opposite ends of the guide member 1, so that the position of the outer peripheral side end, i.e., the fixed point, is set by adjusting the adjust screw 24. If a regulating projection 25 (FIG. 10) is previously set on that part of the chassis body 14 which corresponds to the outer peripheral side end of the guide member 1, it serves as regulating means with which the fixed point position can be univocally settled by only turning the adjust screw 24.

## Claims

1. A disc drive unit for rotating a disc-shaped recording medium, comprising:
a rotary table having a reference surface on which said disc-shaped recording medium is placed;
a head for reading information from said disc-shaped recording medium and/or writing information to said disc-shaped recording medium;
at least one guide member having an inner peripheral end and an outer peripheral end located on the inner peripheral side and the outer peripheral side, respectively, of said disc-shaped recording medium mounted on said rotary table and guiding said head for sliding motion in the radial direction of said disc-shaped recording medium;
a tilt adjustment mechanism for adjusting a tilt of at least the guide member in the radial direction of said disc-shaped recording medium with respect to said reference surface; and
regulating means for restricting the distance from at least said outside end to said reference surface, wherein
the position of said inner peripheral end of the guide member is adjusted such that the inner peripheral end is closer to the reference surface than said outer peripheral end, restricted by said regulating means, is.

2. The disc drive unit according to claim 1, wherein the tilt of said guide member is adjusted by said adjustment mechanism so that the distance from at least a part of said head to said reference surface of said rotary table can lie within a given fluctuation amount of the outer periphery of said disc-shaped recording medium.

3. The disc drive unit for rotating a disc-shaped recording medium, comprising:
a rotary table having a reference surface on which said disc-shaped recording medium is placed;
a head for reading information from said disc-shaped recording medium and/or writing information to said disc-shaped recording medium;
at least one guide member having an inner peripheral end and an outer peripheral end located on the inner peripheral side and the outer peripheral side, respectively, of said disc-shaped recording medium mounted on said rotary table and guiding said head for sliding motion in the radial direction of said disc-shaped recording medium; and
a tilt adjustment mechanism for adjusting a tilt of at least the guide member in the radial direction of said disc-shaped recording medium with respect to said reference surface, wherein
the tilt of said guide member is adjusted by said adjustment mechanism so that the distance from at least a part of said head to said reference surface of said rotary table can be restricted within a given fluctuation amount of the outer periphery of said disc-shaped recording medium.

4. The disc drive unit for rotating a disc-shaped recording medium, comprising:
a rotary table having a reference surface on which said disc-shaped recording medium is placed;
a head for reading information from said disc-shaped recording medium and/or writing information to said disc-shaped recording medium;
at least one guide member having an inner peripheral end and an outer peripheral end located on the inner peripheral side and the outer peripheral side, respectively, of said disc-shaped recording medium mounted on said rotary table and guiding said head for sliding motion in the radial direction of said disc-shaped recording medium;
a tilt adjustment mechanism for adjusting a tilt of at least the guide member in the radial direction of said disc-shaped recording medium with respect to said reference surface; and
a protective member located between said reference surface and said guide member and serving to prevent said guide member from being exposed toward said reference surface, wherein
the tilt of said guide member is adjusted by said adjustment mechanism so that the distance from at least a part of said head to said reference surface of said rotary table can be restricted within a given fluctuation amount of the outer periphery of said disc-shaped recording medium.

5. The disc drive unit according to claim 2, 3 or 4, wherein said given fluctuation amount of the outer periphery is 0.9 mm.

6. A disc drive unit according to claim 1, 2 or 3, which further comprises a protective member located between said reference surface and said guide member and serving to prevent said guide member from being exposed toward said reference surface.

7. The disc drive unit according to claim 4 or 6, wherein said protective member is inclined so that said inner peripheral end side is situated closer to said reference surface than said outer peripheral end side is.

8. The disc drive unit according to claim 4 or 6, wherein said protective member has a recess into which at least a part of said head is evacuated.

9. The disc drive unit according to claim 8, wherein said inner peripheral end side of said recess is inclined so that the inner peripheral end side of the recess is situated closer to the reference surface than said outer peripheral end side is.

10. The disc drive unit according to claim 4, 6 or 8, wherein an adjustment range for said inner peripheral end and/or said outer peripheral end of said guide member is restricted by said protective member during the adjustment by said tilt adjustment mechanism.

11. The disc drive unit according to any one of claims 1 to 10, wherein said tilt adjustment mechanism adjusts a distance between the reference surface and said inner peripheral end or the outer peripheral end.

12. The disc drive unit according to claim 10, wherein said tilt adjustment mechanism is provided only on the inner peripheral end side of said guide member.

13. A disc drive unit according to any one of claims 1 to 11, wherein said tilt adjustment mechanism is provided on each of said inner and outer peripheral end sides of said guide member.
